# EUROPEAN PATENT APPLICATION

(11) **EP 4 625 171 A1**
(43) Date of publication of application: **01.10.2025**
(21) Application number: 23902478.9
(22) Date of filing: 27.11.2023
(51) Int. Cl.: G06F 9/54

(54) **MESSAGE TRANSMISSION METHOD AND APPARATUS, AND DEVICE AND STORAGE MEDIUM**

(30) Priority: 15.12.2022 CN 202211626313
(71) Applicant: Huawei Technologies Co., Ltd., Shenzhen, Guangdong 518129 (CN)
(72) Inventor: ZHANG, Junyi, Shenzhen, Guangdong 518129 (CN); WANG, Qiaoling, Shenzhen, Guangdong 518129 (CN)
(74) Representative: Pfenning, Meinig & Partner mbB
(86) International application number: PCT/CN2023/134259
(87) International publication number: WO 2024/125280

(57) **Abstract**

This application discloses a message transmission method and apparatus, a device, and a storage medium, and relates to the field of RDMA technologies. The method is applied to a first node in a plurality of nodes corresponding to a communication group, the communication group includes a plurality of task processes, and at least one task process is run in each node. The method includes: adding a message sending request of a first message to a first queue pair corresponding to a first task process, where the first queue pair is a queue pair used by the first task process to perform message transmission with all task processes in another node different from the first node; and sending the first message based on the sending request when the message sending request meets a processing condition in the first queue pair. According to this application, occupied storage resources of a network interface card can be reduced.

## Description

This application claims priority to Chinese Patent Application No. 202211626313.9, filed on December 15, 2022 and entitled "MESSAGE TRANSMISSION METHOD AND APPARATUS, DEVICE, AND STORAGE MEDIUM", which is incorporated herein by reference in its entirety.

### TECHNICAL FIELD

This application relates to the field of RDMA technologies, and in particular, to a message transmission method and apparatus, a device, and a storage medium.

### BACKGROUND

In a remote direct memory access (Remote direct memory access, RDMA) technology, a network interface card may directly access data in a memory without using an operating system. This can effectively save resources of a processor (central processing unit, CPU) and improve memory access efficiency.

Currently, when different nodes communicate with each other by using the RDMA technology, if two task processes in different nodes need to communicate with each other, before the communication, each of the two task processes needs to create a queue pair (Queue Pair, QP) in a memory of the node, generate a queue pair context (QP Context, QPC), and store the queue pair context in a network interface card of the node. The QPC is used to record a queue parameter of the queue pair, an inter-process communication parameter, a transmission parameter of a subsequently sent message, and the like.

In the foregoing solution, it is assumed that one communication group includes N nodes, P task processes in each node participate in a task, and any two task processes in different nodes have a communication requirement. In this case, each node needs to create (N-1)*P*P QPs, and correspondingly, (N-1)*P*P QPCs need to be stored in a network interface card of the node. However, storage space of the network interface card is usually small, and a large quantity of QPCs occupy excessive storage space in the network interface card.

### SUMMARY

This application provides a message transmission method and apparatus, a device, and a storage medium, to reduce occupied storage space of a network interface card. Technical solutions are as follows.

According to a first aspect, a message transmission method is provided. The method is applied to a first node in a plurality of nodes corresponding to a communication group, the communication group includes a plurality of task processes that execute a same distributed task, and at least one task process is run in each node. The method includes:
adding a message sending request of a first message to a first queue pair corresponding to a first task process, where the first queue pair is a queue pair used by the first task process to perform message transmission with all task processes in another node different from the first node; and sending the first message based on the sending request when the message sending request meets a processing condition in the first queue pair. Herein, the processing condition may be that message sending requests in a queue pair are sequentially processed based on a sequence of the message sending requests in the queue pair. When the message sending request of the first message reaches the head of a queue, it is determined that the message sending request of the first message meets the processing condition.

In the technical solution provided in this application, for any task process in a node, only one queue pair is needed to communicate with all processes in another node in a communication group. However, in a solution in a conventional technology, for any task process in a node, the task process needs to respectively create corresponding queues for all processes in another node in a communication group. It can be learned that when there is a same quantity of task processes, a quantity of queue pairs that need to be created in the technical solution provided in this application is less than a quantity of queue pairs that need to be created in the conventional technology, and correspondingly, fewer related parameters need to be maintained in a network interface card, so that occupied storage space of the network interface card is effectively reduced.

In a possible implementation, in the solution provided in this application, a QPC in a conventional technology is split into two parts. One part is a parameter for guiding message transmission, which may be referred to as a control plane parameter herein. The other part is a message transmission parameter, which may also be referred to as a data plane parameter. The control plane parameter is obtained and stored in a network interface card when a queue pair is created.

The control plane parameter includes a queue parameter of the queue pair and a communication parameter of the communication group. The queue parameter includes a start address and a queue depth of the queue pair in a memory. The communication parameter of the communication group includes a maximum transmission unit (Maximum Transmission Unit, MTU), an upper limit of a quantity of retransmission times, a timeout time limit, and the like. The MTU indicates a maximum length of a transmitted packet. The upper limit of the quantity of retransmission times indicates an upper limit of a quantity of times for which any data packet is allowed to be retransmitted. The timeout time limit indicates that, for any sent data packet, if a receive end still fails to receive the packet within the timeout time limit, the packet is retransmitted.

In the technical solution provided in this application, the communication parameter of the communication group is determined through negotiation between any task process and all task processes run in another node in the communication group. In other words, a communication parameter obtained by any task process is shared by all the task processes run in the another node in the communication group, and is not unique to each task process. In this way, storage resources of the network interface card can be effectively saved.

In a possible implementation, when creating a control plane parameter, any task process may further determine an identifier of the control plane parameter. The identifier may be allocated by the task process, or may be allocated by the network interface card. In addition, the control plane parameter is unique in the node. Therefore, in one distributed task, the identifier that is of the control plane parameter and that is determined by the task process may also be used to identify the task process. In addition, the task process and all the task processes in the another node in the communication group may further exchange identifiers of respective control plane parameters with each other.

In a possible implementation, the message sending request carries an address of a destination node and an identifier of a control plane parameter corresponding to a destination task process in the destination node. In this way, the network interface card may learn of a task process in a node to which the message is sent.

In a possible implementation, a data packet of the first message carries an identifier of a first control plane parameter, an identifier of the first message, and sequence indication information of the data packet, and the sequence indication information indicates a sending sequence of the data packet in the first message. In the technical solution provided in this application, a data packet may be uniquely identified by using an identifier of a control plane parameter, an identifier of a message, and sequence indication information of the data packet.

In a possible implementation, a group extended transport header (group extended Transport Header) GETH in the data packet carries the identifier of the first control plane parameter.

In a possible implementation, the GETH in the data packet carries the identifier of the first message.

In a possible implementation, the sequence indication information is carried in a packet sequence number (Packet Sequence Number, PSN) field of a base transport header (Base Transport Header, BTH) in the data packet.

In a possible implementation, a message transmission parameter of the first message is generated after the network interface card obtains the message sending request of the first message from the queue pair, and the message transmission parameter is stored in the network interface card.

In the technical solution provided in this application, the message transmission parameter may include the identifier of the message, an address of a source node, an address of a destination node, a storage location of the message sending request, sequence indication information of a next data packet, sequence indication information of a data packet corresponding to a previous received acknowledgement (Acknowledge character, ACK) packet, retransmission timing, a quantity of timeout retransmission times, whether a packet in the message is lost, and the like.

In a possible implementation, to further save storage resources of the network interface card, the message transmission parameter of the first message stored in the network interface card is deleted after a first reception-completed message of the first message is received.

In a possible implementation, the network interface card may also maintain a corresponding message transmission parameter for a received message. Specific processing includes:
receiving a 1^{st} data packet of a second message sent by a third node, generating a message transmission parameter of the second message, and storing the message transmission parameter of the second message in the network interface card; and sending a second reception-completed message of the second message to the third node after a last data packet of the second message is received.

In a possible implementation, to further save storage resources of the network interface card, an acknowledgment message of the second reception-completed message sent by the third node is received, and the message transmission parameter of the second message stored in the network interface card is deleted.

In a possible implementation, in the technical solution provided in this application, transmission of messages may be performed based on priorities, and transmission does not need to be performed in a sequence of message sending requests. Specific processing may include:
adding a message sending request of a third message to the queue pair, where a priority of the third message is higher than a priority of the first message; stopping sending the first message if sending of the first message is not completed, and sending the third message based on the message sending request of the third message; and continuing to send the first message after sending of the third message is completed.

In a possible implementation, the first control plane parameter further includes a quantity of messages that have been sent in the queue pair.

In a possible implementation, the identifier of the message is a message sequence number (Message Sequence Number, MSN). During sending of the first message, the quantity of messages in the first control plane parameter is the MSN of the first message. The quantity of messages in the first control plane parameter is increased by 1 after sending of the first message is completed, where a quantity of messages that is obtained by the increase of 1 is an MSN of a next message sent in the queue pair.

According to a second aspect, a message transmission apparatus is provided. The apparatus is configured on a first node in a plurality of nodes corresponding to a communication group, the communication group includes a plurality of task processes, and at least one task process is run in each node. The apparatus includes:
an adding module, configured to add a message sending request of a first message to a first queue pair corresponding to a first task process, where the first queue pair is a queue pair used by the first task process to perform message transmission with all task processes in another node different from the first node; and
a sending module, configured to send the first message based on the sending request when the message sending request meets a processing condition in the first queue pair.

In a possible implementation, the apparatus further includes a storage module, configured to:
obtain a first control plane parameter, and store the first control plane parameter in a network interface card, where the first control plane parameter includes a queue parameter of the queue pair and a communication parameter of the communication group.

In a possible implementation, the apparatus further includes a determining module, configured to:
determine an identifier of the first control plane parameter.

The sending module is further configured to send the identifier corresponding to the first control plane parameter to all the task processes in the another node.

The apparatus further includes a receiving module, configured to receive identifiers of control plane parameters that respectively correspond to all the task processes in the another node and that are respectively sent by all the task processes in the another node.

In a possible implementation, the message sending request carries an address of a second node and an identifier of a control plane parameter corresponding to a destination process in the second node.

In a possible implementation, a data packet of the first message carries the first identifier, an identifier of the first message, and sequence indication information of the data packet, and the sequence indication information indicates a sending sequence of the data packet in the first message.

In a possible implementation, a GETH in the data packet carries the first identifier.

In a possible implementation, the GETH in the data packet carries the identifier of the first message.

In a possible implementation, the sequence indication information is carried in a PSN field of a BTH in the data packet.

In a possible implementation, the storage module is further configured to:
generate a message transmission parameter of the first message; and
store the message transmission parameter in the network interface card.

In a possible implementation, the storage module is further configured to:
delete the message transmission parameter of the first message stored in the network interface card after a first reception-completed message of the first message is received.

In a possible implementation, the apparatus further includes:
a receiving module, configured to receive a 1^{st} data packet of a second message sent by a third node; and
a storage module, configured to generate a message transmission parameter of the second message, and store the message transmission parameter of the second message in the network interface card.

The sending module is configured to send a second reception-completed message of the second message to the destination network interface card after a last data packet of the second message is received.

In a possible implementation, the apparatus further includes: a receiving module, configured to:
receive an acknowledgment message of the second reception-completed message sent by the third node; and
a storage module, configured to delete the message transmission parameter of the second message stored in the network interface card.

In a possible implementation, the adding module is further configured to:
add a message sending request of a third message to the queue pair, where a priority of the third message is higher than a priority of the first message.

The sending module is further configured to stop sending the first message if sending of the first message is not completed, and send the third message based on the message sending request of the third message; and
continue to send the first message after sending of the third message is completed.

In a possible implementation, the first control plane parameter further includes a quantity of messages that have been sent in the queue pair.

In a possible implementation, the identifier of the first message is an MSN, and during sending of the first message, the quantity of messages in the first control plane parameter is the MSN of the first message; and
the storage module is further configured to:
increase the quantity of messages in the first control plane parameter by 1 after sending of the first message is completed, where a quantity of messages that is obtained by the increase of 1 is an MSN of a next message sent in the queue pair.

According to a third aspect, a computer device is provided. The computing device includes a processor, a storage, and a network interface card, and the processor and the network interface card are configured to execute instructions stored in a storage of at least one computing device, to enable the computing device to perform the message transmission method according to any one of the first aspect or the possible implementations of the first aspect.

According to a fourth aspect, a computer device cluster is provided. The computer device cluster includes at least one computer device according to the third aspect.

According to a fifth aspect, a computer program product including instructions is provided. When the instructions are executed by a computer device or a computer device cluster, the computer device or the computer device cluster is enabled to perform the message transmission method according to any one of the first aspect or the possible implementations of the first aspect.

According to a sixth aspect, a computer-readable storage medium is provided, and includes computer program instructions. When the computer program instructions are executed by a computing device or a computer device cluster, the computing device or the computer device cluster performs the message transmission method according to the first aspect.

### BRIEF DESCRIPTION OF DRAWINGS

FIG. 1 is a diagram of an implementation scenario according to this application;
FIG. 2 is a diagram of an architecture of a system according to this application;
FIG. 3 is a diagram of an architecture of a system according to this application;
FIG. 4 is a diagram of a structure of a computer device according to this application;
FIG. 5 is a flowchart of a message transmission method according to this application;
FIG. 6 is a diagram of a packet header of a data packet according to this application;
FIG. 7 is a flowchart of a message transmission method according to this application; and
FIG. 8 is a diagram of a structure of a message transmission apparatus according to this application.

### DESCRIPTION OF EMBODIMENTS

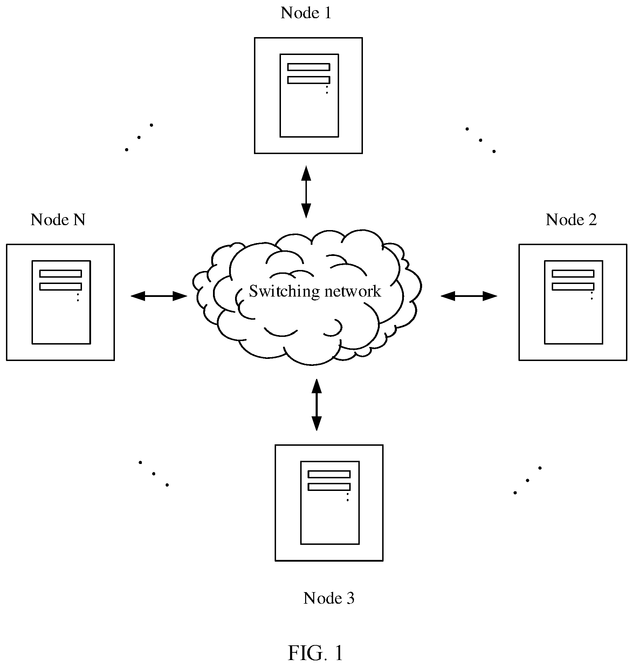

This application provides a message transmission method. The method may be applied to an RDMA technology-based message transmission scenario. FIG. 1 shows a possible implementation scenario of this application. The implementation scenario may be a data center. The implementation scenario includes a plurality of nodes and a switching network. For example, as shown in FIG. 1, the implementation scenario includes N nodes such as a node 1, a node 2, a node 3, ..., and a node N. The plurality of nodes may simultaneously execute one distributed task, and at least one task process may be run in each node to execute the distributed task. These task processes form a communication group. When task processes run in different nodes perform message transmission, the message transmission method provided in this application may be used.

In the message transmission method provided in this application, for any task process in a node, only one queue pair is needed to communicate with all processes in another node in a communication group. However, in a solution in a conventional technology, for any task process in a node, the task process needs to respectively create corresponding queues for all processes in another node in a communication group. It can be learned that when there is a same quantity of task processes, a quantity of queue pairs that need to be created in the technical solution provided in this application is less than a quantity of queue pairs that need to be created in the conventional technology, and correspondingly, fewer related parameters need to be maintained in a network interface card, so that occupied storage space of the network interface card is effectively reduced.

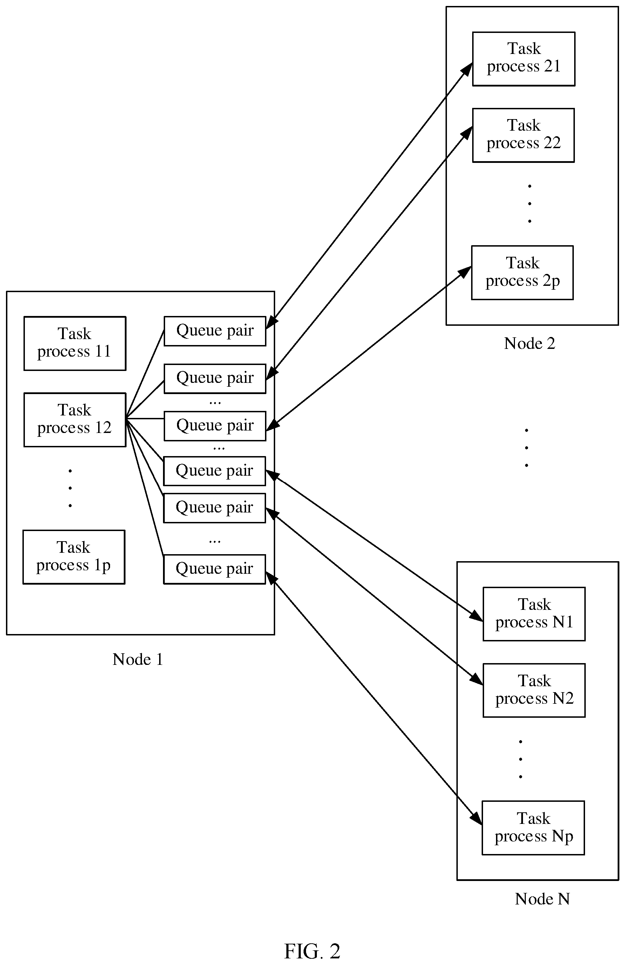

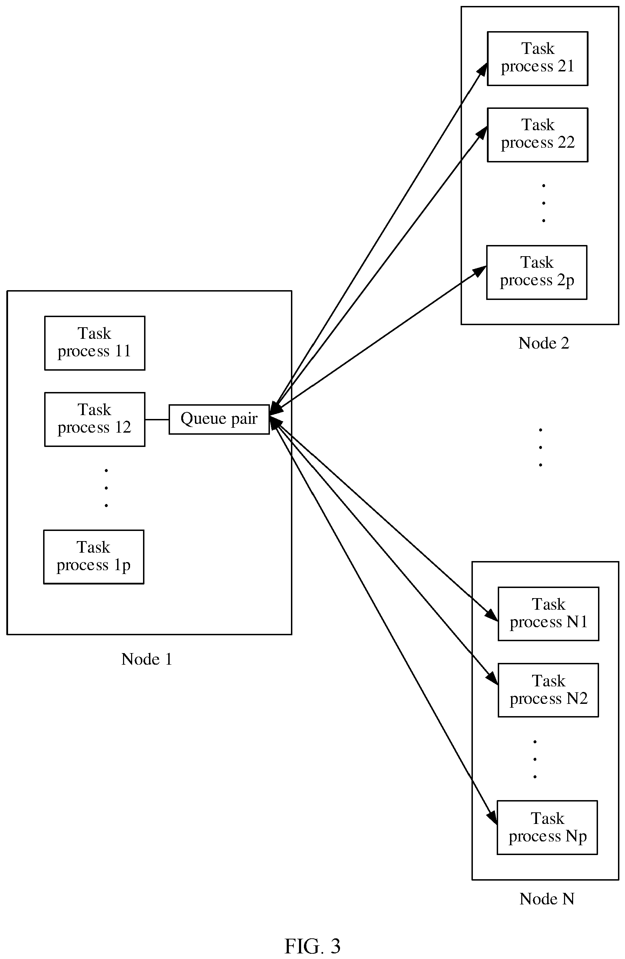

Refer to FIG. 2. A communication group includes a total of N nodes, each node includes p task processes, and task processes run in different nodes have communication requirements. In this case, if the conventional technology is used, a task process 12 in a node 1 is used as an example, and the task process 12 needs to create (N-1)*p queue pairs, which are respectively used to communicate with (N-1)*p task processes (a task process 21, a task process 22, ..., and a task process 2p in a node 2, ..., and a task process N1, a task process N2, ..., and a task process Np in a node N) in other nodes. In this case, if the conventional technology is used, one node needs to create (N-1)*p*p queue pairs. Then, refer to FIG. 3. In a communication group that is the same as that in FIG. 2, the message transmission method provided in this application is used. Similarly, a task process 2 in a node 1 is used as an example. The task process 2 needs to create only one queue pair, to communicate with (N-1)*p task processes in other nodes. In this case, one node needs to create only (N-1)*p queue pairs. In comparison, there are fewer queue pairs created in FIG. 3 than those in FIG. 2, so that fewer related parameters of the queue pairs need to be maintained, and storage resources of the network interface card can be saved.

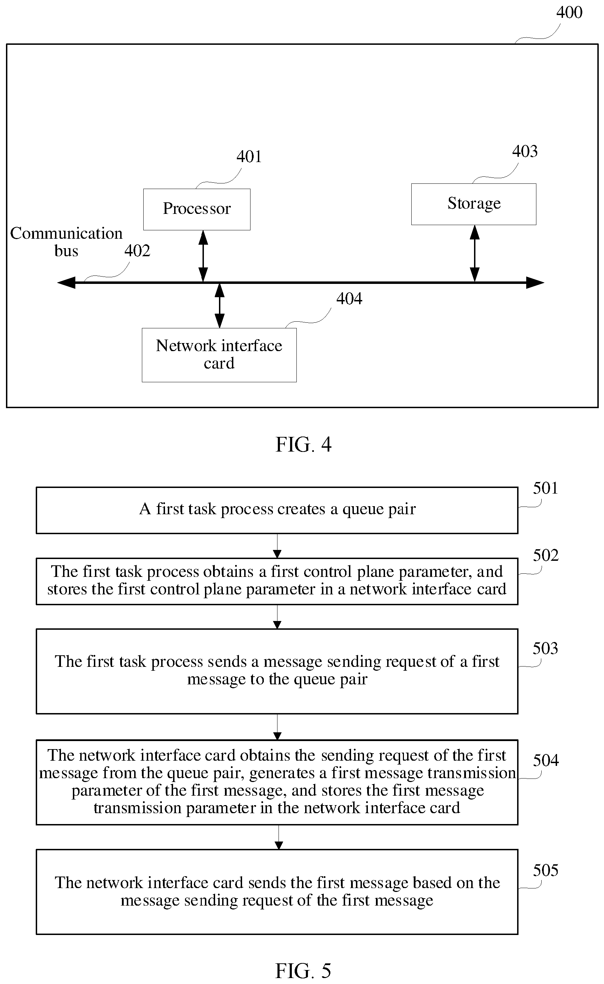

FIG. 4 is a diagram of a structure of a computer device. The computer device 400 in FIG. 4 is optionally implemented by using a general bus architecture, and the computer device 400 may be any node in FIG. 1. The computer device 400 includes at least one processor 401, a communication bus 402, a storage 403, and at least one network interface card 404.

The processor 401 is, for example, a central processing unit (central processing unit, CPU), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 401 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field programmable logic gate array (field programmable gate array, FPGA), a generic array logic (generic array logic, GAL), or any combination thereof. The processor 401 may run the task process in FIG. 2 or FIG. 3, and interact with the network interface card 404.

The communication bus 402 is configured to perform information transmission between the foregoing components. The communication bus 402 may be classified into an address bus, a data bus, a control bus, and the like. For ease of representation, only one bold line is used for representation in FIG. 4, but this does not mean that there is only one bus or only one type of bus.

The storage 403 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or another optical disk storage, an optical disk storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer, but is not limited thereto. For example, the storage 403 exists independently and is connected to the processor 401 through the communication bus 402. Alternatively, the storage 403 may be integrated with the processor 401.

Optionally, the storage 403 is configured to store to-be-sent data mentioned below. Both the processor 401 and the network interface card 404 may access the storage 403, to obtain the to-be-sent data stored in the storage 403.

The network interface card 404 may be an RDMA network interface card (RDMA Network Interface Card, RNIC) that is configured to implement an RDMA-related function.

During specific implementation, in an example, the processor 401 may include one or more CPUs.

During specific implementation, in an example, the computer device 400 may include a plurality of processors. Each of the processors may be a single-core processor (single-CPU), or may be a multi-core processor (multi-CPU). The processor herein may be one or more devices, circuits, and/or processing cores configured to process data (for example, computer program instructions).

During specific implementation, in an example, the computer device 400 may further include an output device and an input device. The output device communicates with the processor 401, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 401, and receives an input from a user in a plurality of manners. For example, the input device may be a mouse, a keyboard, a touchscreen device, or a sensor device.

The following describes the message transmission method provided in this application with reference to the accompanying drawings. Refer to FIG. 5. The method may include the following steps.

Step 501: A first task process creates a queue pair.

One distributed task may be executed by a plurality of nodes, and at least one task process in each node participates in the distributed task. All task processes participating in the distributed task form a communication group. The first task process herein is any task process run in any node in the communication group.

During implementation, after the distributed task starts, before the first task process communicates, for the first time, with task processes run in another node in the communication group, the first task process first creates a queue pair, where the queue pair includes a sending queue and a receiving queue. Processing of creating the queue pair may be as follows.

The first task process registers a first memory region in a memory of the node as the sending queue to store a message sending request. The first task process registers a second memory region in the memory of the node as the receiving queue to store a message receiving request.

The queue pair created by the first task process is used by the first task process to communicate and perform message transmission with all the task processes run in the another node in the communication group. In a period from start to end of the distributed task, the first task process only needs to create the queue pair once.

Step 502: The first task process obtains a first control plane parameter, and stores the first control plane parameter in a network interface card.

The control plane parameter may also be referred to as a control plane state or the like. Considering that the control plane parameter is specific to a communication group rather than a task process, the control plane parameter may also be referred to as a group context (group context, gC) herein.

During implementation, after the queue pair is created in step 501, the first task process registers a third memory region in the network interface card and obtains the first control plane parameter. The third memory region is a part of a memory region in the network interface card, and is configured to store the first control plane parameter, where the first control plane parameter includes a queue parameter of the queue pair and a communication parameter of the communication group. The following separately describes the queue parameter and the communication parameter.

The queue parameter includes a start memory address and a queue depth of the sending queue, and a start memory address and a queue depth of the receiving queue. The start memory address of the sending queue is a start address of the first memory region, and the queue depth of the sending queue is a memory size of the first memory region. The start memory address of the receiving queue is a start address of the second memory region, and the queue depth of the receiving queue is a memory size of the second memory region.

When creating the queue pair, the first task process obtains the queue parameter, and stores the queue parameter in the third memory region after registering the third memory region.

The communication parameter may include a maximum transmission unit (Maximum Transmission Unit, MTU), an upper limit of a quantity of retransmission times, a timeout time limit, and the like. The MTU indicates a maximum length of a transmitted packet. The upper limit of the quantity of retransmission times indicates an upper limit of a quantity of times for which any data packet is allowed to be retransmitted. The timeout time limit indicates that, for any sent data packet, if a receive end still fails to receive the packet within the timeout time limit, the packet is retransmitted.

The first task process negotiates the communication parameter of the communication group jointly with all the task processes run in the other nodes in the communication group, and stores the negotiated communication parameter of the communication group in the third memory region. Herein, the communication parameter may be negotiated in an out-of-band communication manner, for example, transmission control protocol (Transmission Control Protocol, TCP)-based communication. There may be a plurality of methods for negotiating the communication parameter, and one of the methods is described below by using an example.

The first task process sends an originally locally stored communication parameter to all the task processes run in the another node in the communication group. Correspondingly, all the task processes run in the another node in the communication group also respectively send originally locally stored communication parameters to the first task process. If the communication parameters received by the first task process are the same as the originally locally stored communication parameter, the originally locally stored communication parameter is used as the communication parameter of the communication group. If the communication parameters received by the first task process are different from the originally locally stored communication parameter, a smallest communication parameter in the communication parameters is selected as the communication parameter of the communication group.

In addition, when registering the third memory region in the network interface card, the first task process may further determine an identifier of the first control plane parameter. In a node, an identifier of a control plane parameter is unique, and the identifier of the control plane parameter may be allocated by a task process, or may be allocated by a network interface card. Herein, the identifier of the control plane parameter may be referred to as a group context number (group context number, gCN).

When the gCN is allocated by the task process, and the first task process registers the third memory region in the network interface card, the first task process may allocate a first gCN to the first control plane parameter, and deliver the allocated first gCN to the network interface card. After receiving the first gCN, the network interface card may query whether the first gCN has been occupied. If it is found that the first gCN is not occupied, the network interface card records the first gCN as the identifier of the first control plane parameter. If it is found that the first gCN has been occupied, the network interface card returns a registration failure response to the first task process. After receiving the registration failure response, the first task process re-allocates a gCN to the first control plane parameter, and delivers the gCN to the network interface card. The foregoing process is repeated until the network interface card determines that a received gCN of the first control plane parameter is unique, and repetition of the foregoing process stops.

When the gCN is allocated by the network interface card, after the first task process registers the third memory region in the network interface card, the network interface card may allocate an unoccupied gCN to the first control plane parameter. In a possible implementation, the gCN may be an incrementing integer. Each time a gCN is allocated, the network interface card may query a currently allocated maximum gCN, and increase the maximum gCN by a preset value to obtain the gCN of the first control plane parameter. The preset value may be set by the network interface card. For example, the preset value is 1. In this case, after allocating the gCN to the first control plane parameter, the network interface card reports, to the first task process, the gCN allocated to the first control plane parameter.

After obtaining the gCN of the first control plane parameter, the first task process exchanges the gCN with all the task processes that participate in the distributed task and that are in the another node. To be specific, the first task process sends the gCN of the first control plane parameter to all the task processes run in the another node in the communication group, and receives gCNs of respective control plane parameters sent by all the task processes run in the another node in the communication group.

After receiving the gCNs sent by all the task processes that participate in the distributed task and that are in the another node, the first task process associates the gCNs with the corresponding task processes. For example, if the first task process receives a second gCN sent by a second task process, the first task process associates the second gCN with the second task process.

In a possible implementation, the first control plane parameter further includes a quantity of messages that have been sent in the first queue pair.

For messages sent in a same queue pair, each message has one identifier, and the identifier may sequentially increase based on a message sending sequence. The identifier may be referred to as a message sequence number (Message Sequence Number, MSN). The following describes a possible case of the MSN. For example, an MSN of a 1^{st} message sent in the queue pair is 0, an MSN of a 2^{nd} message sent in the queue pair is 1, and an MSN of an X^{th} message sent in the queue pair is X-1. In this case, during sending of a first message, the quantity of messages in the first control plane parameter is an MSN of the first message. After sending of the first message is completed, the quantity of messages in the first control plane parameter is increased by 1, and a quantity of messages that is obtained by the increase of 1 is an MSN of a next message sent in the queue pair. Completion of sending a message herein means that a last data packet of the message is sent by the network interface card.

Step 503: The first task process sends a message sending request of the first message to the queue pair.

During implementation, when the first task process needs to send the first message to a second task process that participates in the distributed task and that is in the another node, the first task process first sends the message sending request of the first message to the sending queue in the queue pair, in other words, writes the message sending request into the first memory region. The message sending request of the first message carries an address of a destination node, a gCN of the second task process, and a storage location of to-be-sent data in the first message. The address of the destination node may be an internet protocol (Internet Protocol, IP) address of the destination node, and the storage location of the to-be-sent data may be a storage address of the to-be-sent data in a memory of the node.

Step 504: The network interface card obtains the sending request of the first message from the queue pair, generates a first message transmission parameter of the first message, and stores the first message transmission parameter in the network interface card.

The message transmission parameter may also be referred to as a message context (msgCtx).

During implementation, after sending the message sending request of the first message to the sending queue, the first task process sends a task notification to the network interface card. After receiving the task notification, the network interface card obtains the sending request of the first message from the queue pair, and then the network interface card generates the first message transmission parameter of the first message, and stores the first message transmission parameter in a memory of the network interface card. As shown in the following Table 1, the first message transmission parameter may include fields shown in the following Table 1.

**Table 1**

| Field | Description |
|---|---|
| msgID | Identifier of a message |
| srcIP | IP address of a source node (a node running a first task process) |
| dstIP | IP address of a destination node |
| ptr_wqe | Storage location of a message sending request |
| send_offset | Sequence indication information of a next data packet |
| ack_offset | Sequence indication information of a data packet corresponding to a most recently received ACK packet |
| TO_tx | Retransmission timing, used for timeout retransmission |
| Retx_limit | Quantity of timeout retransmission times |
| is_pkt_loss | Whether a data packet in the message is lost |

The following describes several fields in Table 1.

msgID: An identifier msgID of the first message may be the MSN in the first control plane parameter. Because the MSN in the first control plane parameter is increased by 1 each time a message is sent, each message sent in a same queue pair has different msgID.

send_offset: Each message includes at least one data packet. In one message, each packet corresponds to one piece of sequence indication information. The sequence indication information may also be referred to as an offset (offset). Different data packets in a same message have different offsets. The offset may represent a quantity of data packets offset by a corresponding data packet relative to a 1^{st} data packet in the message. For example, an offset of the 1^{st} data packet in the message is 0, an offset of a 2^{nd} data packet in the message is 1, an offset of a 3^{rd} data packet in the message is 2, and so on. send_offset in Table 1 represents an offset of a next data packet. For example, before the 1^{st} data packet is sent, send_offset is 0, and after sending of the 1^{st} data packet is completed, send_offset is increased by 1, in other words, send_offset is increased by 1 each time sending of a data packet is completed.

ack_offset: Each time the network interface card receives an ACK packet corresponding to a data packet in the first message, the network interface card updates ack_offset. Herein, the ACK packet carries an offset of a data packet received by the destination node. Correspondingly, after receiving the ACK packet, the network interface card updates ack_offset to the offset carried in the ACK packet.

TO_tx: Each time the network interface card receives the ACK packet, or retransmission is completed, or the timeout time limit is reached, TO_tx is set to zero. If TO_tx reaches the timeout time limit in the control plane parameter, a corresponding data packet is resent starting from a data packet whose corresponding offset is ack_offset+1.

Step 505: The network interface card sends the first message based on the message sending request of the first message.

During implementation, the network interface card obtains the to-be-sent data based on the storage location of the to-be-sent data carried in the message sending request, generates at least one data packet of the first message based on the MTU in the first control plane parameter, and sequentially sends the data packet. Each data packet carries an offset of the data packet, an identifier of a control plane parameter of a destination task process, the identifier of the first control plane parameter, and the identifier of the first message.

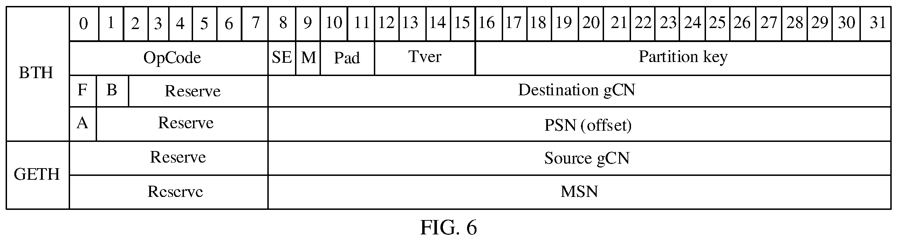

In a data packet header shown in FIG. 6, when encapsulating the to-be-sent data into a data packet, the network interface card may encapsulate the identifier of the first control plane parameter into an extended transport header (Group Extended Transport Header, GETH) of the packet header, that is, a source gCN (Source gCN, sgCN) in FIG. 6. The identifier of the first message may also be encapsulated into the GETH field, that is, an MSN in FIG. 6. The offset may reuse a PSN field in a BTH defined in a standard RDMA protocol.

The following describes other fields in the packet header shown in FIG. 6. The following fields are all defined in the standard RDMA protocol.

OpCode is an operation code, used to identify a transmission mode, an operation type, and a 1^{s1} data packet, an intermediate data packet, and a last data packet of a message. Certainly, in addition to this, another operation code may be further added to the OpCode field. This is not limited in this application. The operation type may include write (read), read (write), send (send), acknowledge (ACK), and the like.

SE is used to identify that a receiver should generate completion information (Completion Queue Element, CQE) for the message.

M is used to identify a path migration status.

Pad is used to identify a quantity of 0-padding bytes at an end of a packet payload (where the packet payload requires four bytes for alignment).

TVer is used to identify a protocol version number which is fixed to 0.

Partition Key is used to identify a partition number of a destination queue pair.

Destination gCN is used to identify the identifier of the control plane parameter of the destination task process.

F: The data packet may be 1, identifying that congestion occurs on a path.

B: The ACK packet may be 1, identifying that an F field of a data packet corresponding to the ACK packet is 1.

Reserve is a reserved field.

In addition, a packet header format in FIG. 6 is merely an example. In this application, specific fields carried in the offset of the data packet, the identifier of the control plane parameter of the destination task process, the identifier of the first control plane parameter, and the identifier of the first message are not limited, provided that the data packet carries the information.

In a possible implementation, according to the message transmission method provided in this application, independent transmission of messages and sequential transmission within a message can be implemented. In other words, different messages are independently transmitted without a sequence limitation. In this way, messages can be sent based on a priority scheduling method, and a head-of-line blocking problem in an RC mode of standard RDMA can be effectively resolved.

There are many specific scheduling methods that may be configured based on an actual requirement. For example, a priority queue may be used. The following describes a scheduling method of the priority queue.

When the priority queue is used, sending queues in a queue pair may include a plurality of sending queues with different priorities. When delivering a message sending request to the sending queue, the first task process may deliver a message to a sending queue with a corresponding priority based on a priority of the message. Specifically, there may be a plurality of manners used by the first task process to determine the priority of the message. This is not limited in this application. The following uses only one example for description.

For example, the first task process may estimate estimated sending duration of the message based on an amount of to-be-sent data of the message, and further determine the priority of the message based on the estimated sending duration. Shorter estimated sending duration of the message indicates a higher priority.

It is assumed that there are three sending queues with different priorities in total: a sending queue with a first priority, a sending queue with a second priority, and a sending queue with a third priority. The first priority is higher than the second priority, and the second priority is higher than the third priority. In this case, the estimated sending duration may be divided into three segments, and each segment corresponds to one priority, as shown in the following Table 2.

**Table 2**

| Estimated sending duration | Priority |
|---|---|
| Less than or equal to a | First priority |
| Greater than a and less than b | Second priority |
| Greater than or equal to b | Third priority |

If the first task process determines that the estimated sending duration of the message is less than or equal to a, the first task process delivers the message sending request to the sending queue with the first priority. If the first task process determines that the estimated sending duration is greater than a and less than b, the first task process delivers the message sending request to the sending queue with the second priority. If the first task process determines that the estimated sending duration is greater than or equal to b, the first task process delivers the message sending request to the sending queue with the third priority.

The network interface card preferentially sends a message in the sending queue with the first priority, then sends a message in the sending queue with the second priority when there is no message sending request in the sending queue with the first priority, and then sends a message in the sending queue with the third priority when there is no message sending request in the sending queue with the second priority. If a message sending request is received in a sending queue with a higher priority during sending of a message in a sending queue with a lower priority, a message in the sending queue with the higher priority may be preferentially sent, and after sending of the message in the sending queue with the higher priority is completed, the message in the sending queue with the lower priority continues to be sent.

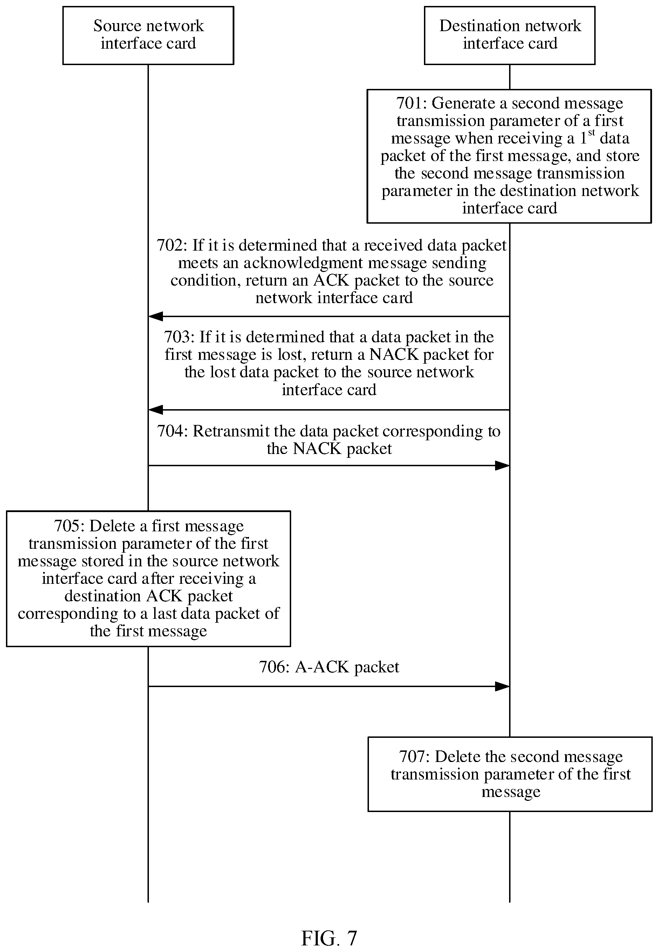

The following describes, with reference to FIG. 7, processing of receiving a first message by a destination node. For ease of description, in the following, a network interface card of the destination node is referred to as a destination network interface card, and a network interface card of a source node is referred to as a source network interface card. A node that performs the process shown in FIG. 5 may be the source node.

Step 701: The destination network interface card generates a second message transmission parameter of the first message when receiving a 1^{st} data packet of the first message, and stores the second message transmission parameter in the destination network interface card.

During implementation, the destination network interface card determines, based on an MSN and an offset that are carried in a currently received data packet, whether the received data packet is the 1^{st} data packet in the first message.

For example, it is assumed that an MSN of the first message is 10 and an offset of the 1^{st} data packet of the first message is 0. In this case, when receiving a data packet, the destination network interface card obtains an MSN and an offset that are carried in the data packet. If it is determined that the offset is 0, it is determined that the data packet is the 1^{st} data packet in the message whose MSN is 10.

The destination network interface card generates the second message transmission parameter of the first message when determining that the currently received data packet is the 1^{st} data packet in the first message, and stores the second message transmission parameter in the destination network interface card.

Different from a first message transmission parameter generated by the source network interface card, ptr_wqe in the second message transmission parameter is a storage location of a message receiving request sent by a destination task process, and ack_offset in the second message transmission parameter indicates sequence indication information of a data packet corresponding to a previous ACK packet (that is, a most recently sent ACK packet) sent by the destination network interface card. Each time the destination network interface card sends an ACK packet for the data packet of the first message, the destination network interface card updates ack_offset to an offset that is of the data packet and that is acknowledged based on the ACK packet.

Step 702: If the destination network interface card determines that the received data packet meets an acknowledgment message sending condition, the destination network interface card returns the ACK packet to the source network interface card.

During implementation, the acknowledgment message sending condition may be that the offset carried in the data packet is an integer multiple of N, where N is a preset positive integer. For example, N=10. Specifically, after receiving the data packet, the destination network interface card returns the ACK packet to the source network interface card if the destination network interface card determines that the offset carried in the data packet is an integer multiple of N, where the ACK packet carries the offset of the data packet. Alternatively, the acknowledgment message sending condition may be that a sending time interval T of the ACK packet reaches a preset time interval, for example, 1 second. Specifically, if the destination network interface card receives a new data packet in sequence within time T after sending a previous ACK packet to the source network interface card, the destination network interface card sends a next ACK packet after the time T elapses from sending of the previous ACK packet to the source network interface card, where the ACK packet carries an offset of a latest received data packet of the first message.

In addition, if the currently received data packet is a last data packet of the first message, a destination ACK packet corresponding to the data packet needs to be returned.

Step 703: If the destination network interface card determines that a data packet in the first message is lost, the destination network interface card returns a negative acknowledgment (Negative ACK, NACK) packet for the lost data packet to the source network interface card.

The NACK packet carries an offset of the lost data packet and the MSN of the first message. A format of the NACK packet is the same as a format of the ACK packet and a format of an A-ACK packet. The three packets are distinguished by different values in OpCode fields in extended transport headers. For example, the ACK packet is 000, the NACK is 001 or 011, and the A-ACK is 100.

The destination network interface card may determine, based on the offset carried in the data packet, whether a data packet in a message is lost. Specifically, when receiving a data packet, a network interface card at a receive end compares a first offset carried in the currently received data packet with a second offset carried in a previously received data packet. If a difference obtained by subtracting the second offset from the first offset is greater than 1, it indicates that the two data packets are discontinuous, in other words, a data packet between the two data packets is lost, and an offset of the lost data packet is a positive integer between the first offset and the second offset.

In addition, when it is determined that a data packet in the first message is lost, the source network interface card updates a value of an "is_pkt_loss" field in the first message transmission parameter to a value indicating that a data packet in the message is lost. For example, when no data packet in the message is lost, the value of the "is_pkt_loss" field is 0. When a data packet in the message is lost, the value of the "is_pkt_loss" field is updated to 1.

Step 704: The source network interface card retransmits the data packet corresponding to the NACK packet after receiving the NACK packet.

In addition, each time the source network interface card retransmits a data packet, the source network interface card increases a quantity of timeout retransmission times recorded in the first message transmission parameter by 1.

Step 705: The source network interface card deletes the first message transmission parameter of the first message stored in the source network interface card after receiving the destination ACK packet corresponding to the last data packet of the first message.

Step 706: The source network interface card returns an acknowledgment for acknowledgment (A-ACK) packet to the network interface card at the receive end.

The A-ACK packet carries the MSN of the first message. The format of the A-ACK packet is the same as the format of the ACK packet and the format of the NACK packet, and the three packets are distinguished by using different values in OpCode fields in packet headers.

Step 707: The source network interface card deletes the second message transmission parameter of the first message after receiving the A-ACK packet.

In addition, if the source network interface card still receives no A-ACK packet after preset duration elapses from sending of the destination ACK packet, the source network interface card deletes the second message transmission parameter of the first message. Herein, the preset duration may be set to a value not less than three times a time limit of timeout retransmission in a first control plane parameter.

According to the message transmission method provided in this application, a control plane parameter can be shared by a plurality of nodes and a plurality of task processes, and a message transmission parameter of a message can be dynamically created or deleted. In a same distributed task scenario, an occupied memory of a network interface card in the message transmission method provided in this application is less than that in the RC mode in the standard RDMA. In addition, according to the message transmission method provided in this application, independent transmission of messages can be implemented, so that a head-of-line blocking problem in the RC mode in the standard RDMA is avoided, and different messages of a same data flow do not need to pass through a same path. A switching device may separately calculate optimal paths based on different messages, so that traffic is evenly distributed in a network, and a congestion problem caused when a plurality of flows pass through a same path is effectively avoided.

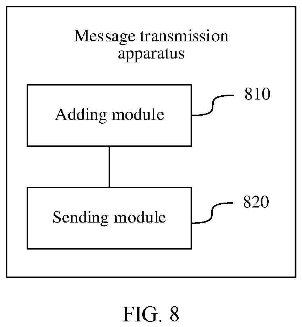

FIG. 8 shows a message transmission apparatus according to an embodiment of this application. The apparatus may be a first node in a plurality of nodes corresponding to a communication group, the communication group includes a plurality of task processes, and at least one task process is run in each node. The apparatus includes:
an adding module 810, configured to add a message sending request of a first message to a first queue pair corresponding to a first task process, where the first queue pair is a queue pair used by the first task process to perform message transmission with all task processes in another node different from the first node; and
a sending module 820, configured to send the first message based on the sending request when the message sending request meets a processing condition in the first queue pair.

In a possible implementation, the apparatus further includes a storage module, configured to:
obtain a first control plane parameter, and store the first control plane parameter in a network interface card, where the first control plane parameter includes a queue parameter of the queue pair and a communication parameter of the communication group.

In a possible implementation, the apparatus further includes a determining module, configured to:
determine an identifier of the first control plane parameter.

The sending module 820 is further configured to send the identifier corresponding to the first control plane parameter to all the task processes in the another node.

The apparatus further includes a receiving module, configured to receive identifiers of control plane parameters that respectively correspond to all the task processes in the another node and that are respectively sent by all the task processes in the another node.

In a possible implementation, the message sending request carries an address of a second node and an identifier of a control plane parameter corresponding to a destination process in the second node.

In a possible implementation, a data packet of the first message carries the first identifier, an identifier of the first message, and sequence indication information of the data packet, and the sequence indication information indicates a sending sequence of the data packet in the first message.

In a possible implementation, a GETH group extended transport header in the data packet carries the first identifier.

In a possible implementation, the GETH group extended transport header in the data packet carries the identifier of the first message.

In a possible implementation, the sequence indication information is carried in a PSN packet sequence number field of a BTH extended transport header in the data packet.

In a possible implementation, the storage module is further configured to:
generate a message transmission parameter of the first message; and
store the message transmission parameter in the network interface card.

In a possible implementation, the storage module is further configured to:
delete the message transmission parameter of the first message stored in the network interface card after a first reception-completed message of the first message is received.

In a possible implementation, the apparatus further includes:
a receiving module, configured to receive a 1^{st} data packet of a second message sent by a third node; and
a storage module, configured to generate a message transmission parameter of the second message, and store the message transmission parameter of the second message in the network interface card.

The sending module 820 is configured to send a second reception-completed message of the second message to the destination network interface card after a last data packet of the second message is received.

In a possible implementation, the apparatus further includes: a receiving module, configured to:
receive an acknowledgment message of the second reception-completed message sent by the third node; and
a storage module, configured to delete the message transmission parameter of the second message stored in the network interface card.

In a possible implementation, the adding module 810 is further configured to:
add a message sending request of a third message to the queue pair, where a priority of the third message is higher than a priority of the first message.

The sending module 820 is further configured to stop sending the first message if sending of the first message is not completed, and send the third message based on the message sending request of the third message; and
continue to send the first message after sending of the third message is completed.

In a possible implementation, the first control plane parameter further includes a quantity of messages that have been sent in the queue pair.

In a possible implementation, the identifier of the first message is a message sequence number MSN, and during sending of the first message, the quantity of messages in the first control plane parameter is the MSN of the first message; and
the storage module is further configured to:
increase the quantity of messages in the first control plane parameter by 1 after sending of the first message is completed, where a quantity of messages that is obtained by the increase of 1 is an MSN of a next message sent in the queue pair.

It may be noted that when the message transmission apparatus provided in the foregoing embodiments performs message transmission, only division of the foregoing function modules is used as an example for illustration. During actual application, the foregoing functions can be allocated to different function modules and implemented based on a requirement. In other words, an inner structure of a device is divided into different function modules to implement all or some of the functions described above. In addition, the message transmission apparatus provided in the foregoing embodiments is based on a same concept as embodiments of the message transmission method. For a specific implementation process, refer to the method embodiments. Details are not described herein again.

An embodiment of this application provides a computer program product. The computer program product includes computer instructions, and the computer instructions are stored in a computer-readable storage medium. A processor of a computer device reads the computer instructions from the computer-readable storage medium, and the processor executes the computer instructions, so that the computer performs the lane selection method.

All or some of the foregoing embodiments may be implemented by using software, hardware, firmware, or any combination thereof. When the software is used for implementation, all or some of embodiments may be implemented in a form of a computer program product. The computer program product includes one or more computer instructions. When the computer program instructions are loaded and executed on a device, all or some of the processes or functions according to embodiments of this application are generated. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial optical cable, an optical fiber, or a digital subscriber line) or wireless (for example, infrared, radio, or microwave) manner. The computer-readable storage medium may be any usable medium accessible by a device, or a data storage device, such as a server or a data center, integrating one or more usable media. The usable medium may be a magnetic medium (for example, a floppy disk, a hard disk, or a magnetic tape), an optical medium (for example, a digital video disk (digital video disk, DVD)), a semiconductor medium (for example, a solid-state drive).

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

In this application, terms such as "first" and "second" are used to distinguish between same items or similar items that have basically same purposes or functions. It should be understood that there is no logical or time sequence dependency between "first" and "second", and a quantity and an execution sequence are not limited. It should also be understood that although the following descriptions use terms such as "first" and "second" to describe various elements, these elements should not be limited by the terms. These terms are merely used to distinguish one element from another. For example, without departing from the scope of various examples, a first task process may be referred to as a second task process, and a first node may also be referred to as a second node. The term "at least one" in this application means one or more, and the term "a plurality of" in this application means two or more.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A message transmission method, wherein the method is applied to a first node in a plurality of nodes corresponding to a communication group, the communication group comprises a plurality of task processes, at least one task process is run in each node, and the method comprises:
adding a message sending request of a first message to a first queue pair corresponding to a first task process, wherein the first queue pair is a queue pair used by the first task process to perform message transmission with all task processes in another node different from the first node; and
sending the first message based on the sending request when the message sending request meets a processing condition in the first queue pair.

2. The method according to claim 1, wherein before adding the message sending request of the first message to the first queue pair corresponding to the first task process, the method further comprises:
creating the first queue pair; and
obtaining a first control plane parameter, and storing the first control plane parameter in a network interface card, wherein the first control plane parameter comprises a queue parameter of the first queue pair and a communication parameter of the communication group.

3. The method according to claim 2, wherein the method further comprises:
determining an identifier of the first control plane parameter;
sending the identifier of the first control plane parameter to all the task processes in the another node; and
receiving identifiers of control plane parameters that respectively correspond to all the task processes in the another node and that are respectively sent by all the task processes in the another node.

4. The method according to claim 3, wherein the message sending request carries an address of a second node and an identifier of a control plane parameter corresponding to a destination task process in the second node.

5. The method according to claim 3 or 4, wherein a data packet of the first message carries the identifier of the first control plane parameter, an identifier of the first message, and sequence indication information of the data packet, and the sequence indication information indicates a sending sequence of the data packet in the first message.

6. The method according to claim 5, wherein a group extended transport header GETH in the data packet carries the identifier corresponding to the first control plane parameter.

7. The method according to claim 5 or 6, wherein the GETH in the data packet carries the identifier of the first message.

8. The method according to any one of claims 5 to 7, wherein the sequence indication information is carried in a packet sequence number PSN field of a base transport header BTH in the data packet.

9. The method according to any one of claims 1 to 8, wherein before sending the first message based on the message sending request when the message sending request meets the processing condition in the first queue pair, the method further comprises:
generating a message transmission parameter of the first message; and
storing the message transmission parameter in the network interface card.

10. The method according to claim 9, wherein the method further comprises:
deleting the message transmission parameter of the first message stored in the network interface card after a first reception-completed message of the first message is received.

11. The method according to any one of claims 1 to 10, wherein the method further comprises:
receiving a 1^{st} data packet of a second message sent by a third node;
generating a message transmission parameter of the second message, and storing the message transmission parameter of the second message in the network interface card; and
sending a second reception-completed message of the second message to the third node after a last data packet of the second message is received.

12. The method according to claim 11, wherein the method further comprises:
receiving an acknowledgment message of the second reception-completed message sent by the third node; and
deleting the message transmission parameter of the second message stored in the network interface card.

13. The method according to any one of claims 1 to 12, wherein the method further comprises:
adding a message sending request of a third message to the first queue pair, wherein a priority of the third message is higher than a priority of the first message;
stopping sending the first message if sending of the first message is not completed, and sending the third message based on the message sending request of the third message; and
continuing to send the first message after sending of the third message is completed.

14. The method according to any one of claims 1 to 13, wherein the first control plane parameter further comprises a quantity of messages that have been sent in the first queue pair.

15. The method according to claim 14, wherein the identifier of the first message is a message sequence number MSN, and during sending of the first message, the quantity of messages in the first control plane parameter is the MSN of the first message; and
the method further comprises:
increasing the quantity of messages in the first control plane parameter by 1 after sending of the first message is completed, wherein a quantity of messages that is obtained by the increase of 1 is an MSN of a next message sent in the first queue pair.

16. A message transmission apparatus, wherein the apparatus is configured on a first node in a plurality of nodes corresponding to a communication group, the communication group comprises a plurality of task processes, at least one task process is run in each node, and the apparatus comprises:
an adding module, configured to add a message sending request of a first message to a first queue pair corresponding to a first task process, wherein the first queue pair is a queue pair used by the first task process to perform message transmission with all task processes in another node different from the first node; and
a sending module, configured to send the first message based on the sending request when the message sending request meets a processing condition in the first queue pair.

17. A computer device, wherein the computing device comprises a processor, a storage, and a network interface card, wherein
the processor and the network interface card are configured to execute instructions stored in a storage of the at least one computing device, to enable the computing device to perform the message transmission method according to any one of claims 1 to 15.

18. A computer program product comprising instructions, wherein when the instructions are executed by a computer device, the computer device is enabled to perform the message transmission method according to any one of claims 1 to 15.

19. A computer-readable storage medium, comprising computer program instructions, wherein when the computer program instructions are executed by a computing device, the computing device performs the message transmission method according to any one of claims 1 to 15.
